# EUROPÄISCHE PATENTSCHRIFT

(11) **EP 1 931 177 B1**
(45) Veröffentlichungstag und Bekanntmachung des Hinweises auf die Patenterteilung: **27.05.2015**
(21) Anmeldenummer: 07121446.4
(22) Anmeldetag: 23.11.2007
(51) Int. Cl.: H05B 6/12

(54) **Heizvorrichtungsschaltung**
Heating device connection
Circuit de dispositif de chauffage

(30) Priorität: 04.12.2006 ES 200603163
(43) Veröffentlichungstag der Anmeldung: 11.06.2008
(73) Patentinhaber: BSH Hausgeräte GmbH, 81739 München (DE)
(72) Erfinder: Almolda Fandos, Manuel, 50007 Zaragoza (ES); Burdio Pinilla, José Miguel, 50018 Zaragoza (ES); Garde Aranda, Ignacio, 50012 Zaragoza (ES); Hernandez Blasco, Pablo Jesus, 50017 Zaragoza (ES); Llorente Gil, Sergio, 50009 Zaragoza (ES); Lorente Perez, Alfonso, 50000 Zaragoza (ES); Mediano Heredia, Arturo, 50012 Zaragoza (ES); Monterde Aznar, Fernando, 50013 Zaragoza (ES); Peinado Adiego, Ramon, 50008 Zaragoza (ES)

(56) Entgegenhaltungen:
- EP-A- 0 844 807
- EP-A- 1 303 168
- WO-A-97/37515
- DE-A1-102004 003 126
- FR-A- 2 863 039

## Beschreibung

Die Erfindung geht aus von einer Heizvorrichtungsschaltung, insbesondere für eine Induktionskochvorrichtung, nach dem Oberbegriff des Anspruchs 1 sowie von einem Verfahren zur Leistungsversorgung von zumindest zwei Heizelementen bei einer Heizvorrichtung, insbesondere einer Induktionskochvorrichtung, nach dem Oberbegriff des Anspruchs 15.

Heizvorrichtungen, insbesondere Induktionskochvorrichtungen, mit einem Satz von Heizkörpern sind bekannt. Diese werden in einem Heizbetrieb jeweils mittels einer Leistungseinheit mit Leistung versorgt.

Die Aufgabe der Erfindung besteht insbesondere darin, eine Heizvorrichtungsschaltung für eine gattungsgemäße Heizvorrichtung bereitzustellen, mittels welcher ein für die Leistungseinheit schonender Betrieb der Heizvorrichtung und somit eine hohe Lebensdauer der Leistungseinheit erreicht werden können.

Die Aufgabe wird erfindungsgemäß durch die Merkmale der Patentansprüche 1 und 15 gelöst, während vorteilhafte Ausgestaltungen und Weiterbildungen der Erfindung den Unteransprüchen entnommen werden können.

Die Erfindung geht aus von einer Heizvorrichtungsschaltung, insbesondere für eine Induktionskochvorrichtung, mit zumindest einer ersten Leistungseinheit, die zur Leistungsversorgung eines Heizelements vorgesehen ist.

Es wird vorgeschlagen, dass die Heizvorrichtungsschaltung eine Entlastungseinheit aufweist, die dazu vorgesehen ist, durch eine wenigstens teilweise Leistungsübernahme in zumindest einem Betriebsmodus die erste Leistungseinheit zu entlasten. Hierdurch können bei einem Betrieb des Heizelements mit hoher Heizleistung eine Überlastung und/oder eine hohe Belastung auf lange Dauer der Leistungseinheit vorteilhaft vermieden werden. Insbesondere kann Beschädigungen der Leistungseinheit auf Grund von dauerhaften Betrieben, bei welchen hohe Temperaturen durch Leistungsverluste hervorgerufen werden können, vorgebeugt werden, und es kann der Einsatz von aufwendigen Kühlungsmaßnahmen auf lange Dauer vorteilhaft reduziert werden. Unter einer "wenigstens teilweisen Leistungsübernahme" kann insbesondere eine Übernahme wenigstens eines Teils einer von der Leistungseinheit abzugebenden Leistung durch eine weitere Einheit verstanden werden. Beispielsweise kann die Entlastungseinheit eine zweite, dem Heizelement zugeordnete Leistungseinheit aufweisen, die wahlweise zur Entlastung der ersten Leistungseinheit eingeschaltet werden kann.

Die erfindungsgemäße Heizvorrichtungsschaltung eignet sich insbesondere für den Einsatz bei Induktionskochvorrichtungen, wie z.B. bei Induktionskochfeldern. Hierbei sind die Heizelemente vorzugsweise als Induktionsheizspulen ausgebildet, die im Betrieb mit einem eine Heizfrequenz aufweisenden Wechselstrom gespeist werden. Zur Erzeugung der Heizfrequenz und der Heizleistung ist die Leistungseinheit vorzugsweise als Wechselrichter ausgebildet. Dieser weist insbesondere Schaltmittel in Form von Halbleiterelementen auf, die, ausgehend von einem Gleichstromsignal, mittels Schaltvorgängen den Wechselstrom mit der Heizfrequenz erzeugen. Bezieht das Heizelement eine hohe Leistung von der Leistungseinheit, kann eine hohe Temperatur der Leistungseinheit, insbesondere aufgrund von Leistungsverlusten der Halbleiterelemente, erreicht werden. Durch die Entlastungseinheit kann eine aufwendige und dauerhafte Kühlung der Leistungseinheit vermieden werden und es kann ein vorteilhafter Schutz der Halbleiterelemente erzielt werden.

Eine besonders konstruktiv einfache Entlastungseinheit kann erreicht werden, wenn zumindest eine zweite Leistungseinheit für ein zweites Heizelement vorgesehen ist und die Entlastungseinheit zumindest teilweise einstückig mit der zweiten Leistungseinheit ausgeführt ist. Die zweite Leistungseinheit kann wahlweise zur Versorgung des zweiten Heizelements und/oder zum Zweck einer Entlastung der ersten Leistungseinheit zur Versorgung des ersten Heizelements betrieben werden. Hierbei kann die Entlastungseinheit eine Recheneinheit aufweisen, die dazu vorgesehen ist, die Leistungsversorgung der Heizelemente unter den Leistungseinheiten zu verteilen, wodurch ein optimierter Betrieb der Leistungseinheiten erreicht werden kann.

Es wird außerdem vorgeschlagen, dass zumindest eine zweite Leistungseinheit für ein zweites Heizelement vorgesehen ist und die Entlastungseinheit dazu dient, bei einer Leistungsversorgung von zumindest zwei Heizelementen mittels der Leistungseinheiten eine Leistungsübernahme von zumindest einem Teil einer von der ersten Leistungseinheit abgegebenen Leistung durch die zweite Leistungseinheit zu bewirken. Dadurch kann schnell und flexibel eine Aufteilung der Leistungsversorgung bei einem gleichzeitigen Betrieb von beiden Heizelementen erreicht werden. Hierbei wird vorteilhafterweise mittels der Entlastungseinheit bei einem Zuführen einer Leistung durch die Leistungseinheiten an zumindest zwei Lasten ein Teil einer der ersten Leistungseinheit zugeordneten Last der zweiten Leistungseinheit zugeordnet.

Eine besonders einfache Ausgestaltung der Entlastungseinheit kann erzielt werden, wenn die Entlastungseinheit eine Schalteinheit aufweist, die dazu vorgesehen ist, die Leistungsübernahme mittels eines Austauschs der von den Leistungseinheiten abzugebenden Leistungen zu bewirken. Hierbei bewirkt die Schalteinheit vorteilhafterweise, dass eine gegenseitige Übernahme von der ersten Leistungseinheit und der zweiten Leistungseinheit bezüglich der Abgabe einer jeweils an ein Heizelement abzugebenden Leistung erfolgt. Vorteilhafterweise erfolgt ein Austausch zwischen zwei Leistungseinheiten, die im Betrieb der Heizelemente diese mit Leistungen versorgen, die voneinander wesentlich verschieden sind. Zwei Leistungen sind voneinander "wesentlich" verschieden, wenn die kleinste Leistung weniger als 75 %, vorteilhaft weniger als 60 % und bevorzugt weniger als 50 % der größten Leistung beträgt.

Der Austausch kann besonders einfach erreicht werden, wenn durch die Schalteinheit eine Wirkverbindung der ersten Leistungseinheit mit einem der Heizelemente und eine Wirkverbindung der zweiten Leistungseinheit mit dem anderen der Heizelemente ausgetauscht werden. Dies kann konstruktiv einfach durch den Einsatz von kostengünstigen Schaltmitteln, wie z.B. Relais, erzielt werden.

Des Weiteren kann eine besonders vorteilhafte Abstimmung innerhalb der Heizvorrichtungsschaltung, insbesondere zwischen der Entlastungseinheit und einer Sensoreinheit, erreicht werden, wenn die Heizvorrichtungsschaltung eine Sensoreinheit zur Erfassung einer Kenngröße aufweist, mit welcher die Entlastungseinheit in Wirkverbindung steht. Ferner kann mittels der Sensoreinheit die Entlastungseinheit als Regeleinheit zum Regeln eines Betriebs der Leistungseinheit ausgebildet sein.

In diesem Zusammenhang wird vorgeschlagen, dass die Entlastungseinheit eine Steuereinheit aufweist, die dazu vorgesehen ist, in Abhängigkeit von der Kenngröße die Leistungsübernahme zu bewirken, wodurch ein an eine Anwendungssituation angepasster, für die Leistungseinheit schonender Betrieb der Heizvorrichtung erreicht werden kann.

Es kann eine auf einen aktuellen Parameter der Leistungseinheit abgestimmte Entlastungsstrategie der Entlastungseinheit vorteilhaft erreicht werden, wenn die Sensoreinheit zur Erfassung einer Kenngröße zumindest der ersten Leistungseinheit vorgesehen ist.

Zweckmäßigerweise weist die Sensoreinheit ein Sensormittel zur Erfassung einer Temperaturkenngröße auf. Dadurch kann ein auf die Vermeidung von hohen Temperaturen abgestimmter Betrieb der Heizvorrichtung besonders einfach erreicht werden. Die Temperaturkenngröße ist vorzugsweise als eine temperaturabhängige elektrische Kenngröße, wie z.B. als Spannung, Widerstand, Stromintensität usw., ausgebildet. Ferner kann dadurch die Entlastungseinheit als Regeleinheit zum Regeln der Temperatur, insbesondere der Temperatur der Leistungseinheit, bei einem Betrieb der Leistungseinheit ausgebildet sein.

Es wird außerdem vorgeschlagen, dass die Sensoreinheit einen Strommesser aufweist. Dadurch kann eine besonders einfache und kostengünstige Sensoreinheit erreicht werden. Besonders vorteilhaft kann mittels des Strommessers ein durch die Leistungseinheit fließender Strom erfasst werden. Ferner kann eine mittels des Strommessers erfasste Stromkenngröße als Temperaturkenngröße zumindest zum Berücksichtigen der Temperatur der Leistungseinheit dienen. Eine effektive Entlastung der Leistungseinheit kann außerdem erreicht werden, wenn zusätzlich zum Strommesser ein Temperatursensor zur Erfassung einer weiteren Temperaturkenngröße vorgesehen ist.

Eine besonders effektive Entlastungsstrategie kann erreicht werden, wenn zumindest eine zweite Leistungseinheit vorgesehen ist und die Entlastungseinheit eine Steuereinheit aufweist, die dazu vorgesehen ist, die Leistungsübernahme anhand eines Vergleichs zwischen zwei sensierten, jeweils einer Leistungseinheit zugeordneten Kenngrößen zu bewirken. Ist die Kenngröße als Temperaturkenngröße ausgebildet, kann ein Betrieb der Heizvorrichtung erreicht werden, indem vorteilhaft ein Temperaturausgleich zwischen den Leistungseinheiten hergestellt werden kann. Beispielsweise kann ein Austausch der von den Leistungseinheiten abzugebenden Leistungen erfolgen, wenn eine Differenz zwischen den Temperaturkenngrößen eine voreingestellte Schwelle erreicht.

In einer weiteren Ausführungsvariante der Erfindung wird vorgeschlagen, dass die Entlastungseinheit eine Steuereinheit aufweist, die dazu vorgesehen ist, die Leistungsübernahme periodisch zu bewirken. Dadurch kann eine einfache und kostengünstige Heizvorrichtungsschaltung erreicht werden. Unter einer "periodischen" Leistungsübernahme kann in diesem Zusammenhang eine Leistungsübernahme verstanden werden, die regelmäßig nach einer, vorzugsweise einstellbaren, über eine bestimmte Zeit gleich bleibenden Zeitperiode wiederholt wird.

Ein einfacher Ausbau der Entlastungseinheit kann ferner erreicht werden, wenn zumindest eine zweite Leistungseinheit vorgesehen ist und die erste und die zweite Leistungseinheit in einer Doppelbrückenschaltung angeordnet sind. Insbesondere kann ein kostengünstiger Aufbau dadurch erreicht werden, dass die Leistungseinheiten in einer Doppelhalbbrückentopologie angeordnet sind.

Es wird ferner vorgeschlagen, dass die Entlastungseinheit eine Schalteinheit aufweist, die zur wahlweisen Verbindung der Leistungseinheiten mit jeweils einem ersten oder zumindest einem zweiten Brückenzweig vorgesehen ist, wodurch ein einfacher Aufbau und eine schnelle Umschaltung bei der Leistungsübernahme erreicht werden können. Hierbei sind die den Leistungseinheiten zugeordneten Heizelemente vorzugsweise jeweils in einem Brückenzweig der Brückenschaltung angeordnet.

In einer weiteren Ausbildungsform wird vorgeschlagen, dass die Heizvorrichtungsschaltung einen Satz von Heizelementen und eine Steuereinheit aufweist, die dazu vorgesehen ist, abhängig von einer Position eines zu heizenden Gegenstands relativ zu den Heizelementen eine zum Heizen des Gegenstands ausgebildete Heizgruppe von Heizelementen zu bilden. Dies eignet sich insbesondere für den Einsatz der Heizvorrichtungsschaltung bei einer Kochvorrichtung. Dabei sind die Heizelemente vorzugsweise unterhalb einer Kochplatte angeordnet. Bei einem Gruppenbetrieb zum Heizen des Gegenstands setzt sich eine Heizgruppe von Heizelementen vorzugsweise aus Heizelementen des Satzes zusammen, die vom sich auf der Kochplatte befindenden Gegenstand, insbesondere einem Kochgeschirr, zumindest teilweise gedeckt sind. Die Anordnung der Heizelemente ist vorzugsweise als Matrixanordnung ausgelegt. Dabei können Heizelemente unterschiedlicher Reihen und/oder unterschiedlicher Spalten der Matrixanordnung vom auf der Kochplatte aufgelegten Gegenstand zumindest teilweise gedeckt sein. Die Heizelemente sind vorzugsweise derart dimensioniert, dass ein Kochgeschirr üblicher Dimensionen, wie z.B. ein Topf mit einem Durchmesser von zumindest 8 cm, Heizelemente unterschiedlicher Reihen und unterschiedlicher Spalten zumindest teilweise deckt. Der Satz von Heizelementen legt eine zu einem Heizen des Gegenstands geeignete, zusammenhängende Kochzone der Kochplattenoberfläche fest, welche zumindest einen überwiegenden Teil der Kochplattenoberfläche, vorteilhaft zumindest 60 %, bevorzugt mindestens 70 % und besonders vorteilhaft zumindest 80 % der Kochplattenoberfläche deckt. Beim Verstellen des Gegenstands auf der Kochplatte kann flexibel ein Heizen von Gegenständen in beliebig gewählten Positionen dieser Gegenstände innerhalb dieser Kochzone durchgeführt werden. Die Steuereinheit ist hierbei vorzugsweise dazu vorgesehen, die Zusammensetzung der Heizgruppe an eine Änderung der Position des Gegenstands relativ zu den Heizelementen zumindest teilautomatisch, vorteilhaft vollautomatisch anzupassen. Beim Auflegen eines weiteren Gegenstands kann eine weitere Heizgruppe zum Durchführen eines Gruppenbetriebs gebildet werden. Eine für einen Gruppenbetrieb der Heizelemente vorgesehene Heizvorrichtungsschaltung ist vorzugsweise mit einer großen Anzahl von Heizelementen, wie insbesondere mit zumindest sechs Heizelementen, versehen. Um eine hohe Flexibilität in der Positionierung des Gegenstands für einen Heizbetrieb zu erreichen, ist die Heizvorrichtungsschaltung vorzugsweise mit einem Satz von zumindest zehn, vorteilhaft zumindest zwanzig, besonders bevorzugt zumindest vierzig Heizelementen versehen.

Durch die Entlastungseinheit kann bei einer solchen Anordnung einer großen Anzahl von Heizelementen ein besonders vorteilhafter Temperaturausgleich bei einem Betrieb der Heizvorrichtung erreicht werden. Insbesondere können lokale Temperaturspitzen in dieser Anordnung vermieden werden, wodurch der Einsatz von weiteren Kühlungsmaßnahmen, wie z.B. einer Lüftung und/oder von einem Kühlkörper mit großer, an eine Matrixanordnung der Heizelemente angepasster Kühlfläche, vorteilhaft reduziert werden kann.

Die Erfindung geht ferner aus von einem Verfahren zur Leistungsversorgung von zumindest zwei Heizelementen bei einer Heizvorrichtung, insbesondere einer Induktionskochvorrichtung, mittels zumindest einer ersten und einer zweiten Leistungseinheit.

Es wird vorgeschlagen, dass bei einer Leistungsversorgung von zumindest zwei Heizelementen mittels der Leistungseinheiten zumindest ein Teil einer von der ersten Leistungseinheit abzugebenden Leistung von der zweiten Leistungseinheit übernommen wird. Dadurch kann schnell und flexibel eine Aufteilung der Leistungsversorgung unter den Leistungseinheiten bei einem gleichzeitigen Betrieb von beiden Heizelementen erreicht werden. Hierbei kann bei einem Betrieb der Heizelemente mit hoher Heizleistung eine Überlastung und/oder eine hohe und dauerhafte Belastung der Leistungseinheiten vorteilhaft vermieden werden.

Außerdem wird vorgeschlagen, dass die Leistungsübernahme mittels eines Austauschs der von den Leistungseinheiten abzugebenden Leistungen erfolgt, wodurch eine besonders einfache Entlastungsprozedur erreicht werden kann.

Es kann ferner ein an eine Anwendungssituation angepasster, für die Leistungseinheit schonender Betrieb der Heizvorrichtung erreicht werden, wenn die Leistungsübernahme in Abhängigkeit von einer sensierten Kenngröße erfolgt.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionskochfeld mit Kochzonen in einer Ansicht von oben,
- Fig. 2: ein weiteres Induktionskochfeld mit einer Matrixanordnung von Induktionsspulen, die zu einem Gruppenbetrieb vorgesehen sind,
- Fig. 3: eine interne Schaltung der Heizvorrichtungen aus den Figuren 1 und 2 mit einer Doppelhalbbrückentopologie und einer Entlastungseinheit,
- Fig. 4: eine alternative Ausführung der internen Schaltung, umfassend eine Doppelvollbrückentopologie mit gemeinsamem Schalterzweig,
- Fig. 5: eine weitere Ausführung der internen Schaltung, umfassend eine Doppelvollbrückentopologie,
- Fig. 6: den Verlauf der Temperatur von zwei Leistungseinheiten der Schaltung und den Verlauf der von den Leistungseinheiten abgegebenen Leistungen als Funktion der Zeit in einer Entlastungsstrategie der Entlastungseinheit aus Figur 3,
- Fig. 7a, Fig. 7b: eine alternative Ausführung der internen Schaltung der Heizvorrichtungen aus den Figuren 1 und 2 mit zwei Leistungseinheiten und einer Entlastungseinheit,
- Fig. 8: den Verlauf der Temperatur der Leistungseinheiten aus Figur 7 und den Verlauf der von den Leistungseinheiten abgegebenen Leistung als Funktion der Zeit in einer Entlastungsstrategie der Entlastungseinheit aus Figur 7 und
- Fig. 9: eine weitere Entlastungsstrategie der Entlastungseinheit aus Figur 3.

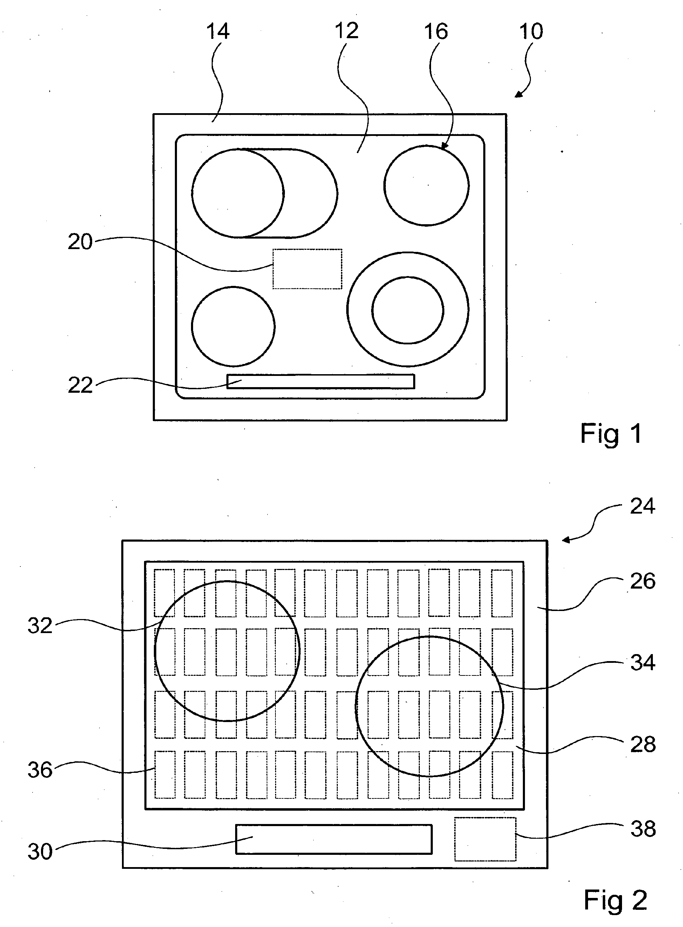

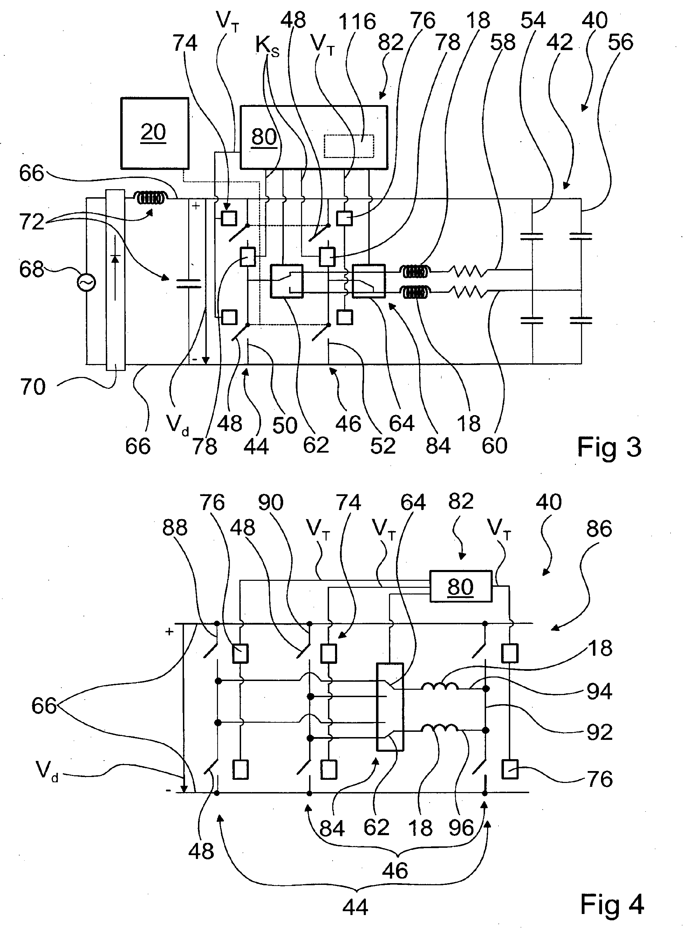

Figur 1 zeigt eine als Induktionskochfeld ausgebildete Heizvorrichtung 10 mit einer Kochplatte 12 und einem Rahmen 14, an welchem die Kochplatte 12 befestigt ist. Die Heizvorrichtung 10 kann in einer nicht gezeigten Arbeitsplatte integriert werden. Die Kochplatte 12 weist mehrere Kochzonen 16 auf, die durch Dekorabschnitte der Kochplatte 12 bezeichnet sind. Die Kochzonen 16 stellen hierzu jeweils eine Auflagefläche zum Auflegen eines Kochgeschirrs dar. Ferner sind die Kochzonen 16 jeweils einem unterhalb der Kochplatte 12 angeordneten Heizelement 18 (in Figur 3 gezeigt) der Heizvorrichtung 10 zugeordnet. Die Heizelemente 18 sind als Induktionsheizspulen ausgebildet. Zum Steuern eines Betriebs der Heizelemente 18 ist die Heizvorrichtung 10 mit einer Steuereinheit 20 versehen, die in der Figur gestrichelt dargestellt ist. Die Heizvorrichtung 10 weist ferner ein Bedienfeld 22 auf, mittels dessen ein Bediener einen Betrieb der Heizelemente 18 starten, stoppen und einstellen kann.

In Figur 2 ist eine weitere, als Induktionskochfeld ausgebildete Heizvorrichtung 24 dargestellt. Die Heizvorrichtung 24 weist einen Befestigungsrahmen 26 zur Befestigung an einer Arbeitsplatte, eine Kochplatte 28 zum Auflegen von Kochgeschirren und ein Bedienfeld 30 zum Starten, Stoppen und Einstellen eines Heizbetriebs auf. Auf der Kochplatte 28 sind zwei als Topf ausgebildete Gegenstände 32, 34 angeordnet, die jeweils durch eine durchgezogene Kreislinie schematisch dargestellt sind. Zur Durchführung eines Kochbetriebs der Heizvorrichtung 24 ist diese mit einem Satz von Heizelementen 36 versehen, die jeweils als Induktionsspule ausgebildet sind. Die Anordnung der Heizelemente 36, die in der Figur durch ein gestricheltes Rechteck schematisch dargestellt sind, ist als Matrixanordnung ausgelegt. Dabei sind Heizelemente 36 unterschiedlicher Spalten und unterschiedlicher Reihen vom Gegenstand 32 gedeckt.

Die Heizvorrichtung 24 ist zur Erwärmung der Gegenstände 32, 34 mittels eines Gruppenbetriebs der Heizelemente 36 vorgesehen. Hierzu sind die Heizelemente 36 jeweils mit einem nicht näher dargestellten Sensormittel versehen, mittels dessen erkannt werden kann, ob ein Heizelement 36 von einem der Gegenstände 32, 34 zumindest teilweise bedeckt ist. Mit Hilfe eines nicht näher beschriebenen Gruppierungsprozesses werden Heizgruppen von Heizelementen 36 gebildet, die jeweils einem der Gegenstände 32, 34 zugeordnet sind. Zur Durchführung des Gruppierungsprozesses und zur Steuerung der gebildeten Heizgruppen ist die Heizvorrichtung 24 mit einer Steuereinheit 38 versehen, die in der Figur schematisch gestrichelt dargestellt ist. Startet ein Bediener einen Kochbetrieb der Heizvorrichtung 24 mittels des Bedienfelds 30, wird dieser Kochbetrieb mittels der Heizelemente 36 beider Heizgruppen durchgeführt, während die weiteren Heizelemente 36, die zu keinem der gebildeten Heizgruppen gehören, unbetrieben verbleiben. Verstellt der Bediener einen der Gegenstände 32, 34 auf der Kochplatte 28 oder stellt er ein weiteres Kochgeschirr auf die Kochplatte 28, werden anhand der neuen Anordnung von zu heizenden Gegenständen relativ zu den Heizelementen 36 entsprechende Heizgruppen von Heizelementen 36 angepasst bzw. neu gebildet.

In einem Betrieb eines Heizelements 18 bzw. 36 in beiden der hier oben beschriebenen Ausführungsbeispiele wird von diesem ein als magnetisches Wechselfeld ausgebildetes Heizsignal erzeugt, welches eine Heizfrequenz, die z.B. 25 kHz beträgt, aufweist. Das Heizsignal induziert elektrische Ströme im metallischen Boden von auf der Kochplatte 12 bzw. 28 aufgestellten Kochgeschirren, wie z.B. von den Gegenständen 32, 34. Diese elektrischen Ströme erwärmen durch ohmsche Verluste eine sich in den Gegenständen 32, 34 befindende Speise. Ein Heizelement 18 bzw. 36 wird zur Erzeugung des Heizsignals mit einem elektrischen Wechselstrom gespeist, welcher mit der Heizfrequenz oszilliert. Zur Erzeugung dieses Wechselstroms ist den Heizelementen 18 bzw. 36 jeweils eine als Wechselrichter ausgebildete Leistungseinheit zugeordnet. Diese Leistungseinheiten sind in den nächsten Figuren dargestellt.

Figur 3 zeigt in einer schematischen Darstellung eine interne Heizvorrichtungsschaltung 40 der Heizvorrichtungen 10 und 24. Hierbei soll bemerkt werden, dass die folgende Beschreibung der Heizvorrichtungsschaltung 40 beide Ausführungen 10 und 24 der Heizvorrichtung betrifft. Um Wiederholungen zu vermeiden, sind in den Figuren 3 ff. und in der entsprechenden Beschreibung die als Induktionsspulen ausgebildeten Heizelemente mittels des Bezugszeichens 18 bezeichnet, wobei die Beschreibung ebenfalls für die Heizelemente 36 der Heizvorrichtung 24 gilt.

Die als Induktionsspulen ausgebildeten Heizelemente 18 sind Teil einer Doppelbrückenschaltung 42, in welcher zwei Leistungseinheiten 44, 46 zur Leistungsversorgung der Heizelemente 18 ebenfalls angeordnet sind. Die Leistungseinheiten 44, 46 sind jeweils als Wechselrichter ausgebildet. Ein Wechselrichter weist hierbei jeweils ein Paar von Schaltmitteln 48 auf, die in einem Zweig der Doppelbrückenschaltung 42 in Reihe geschaltet sind. Die Schaltmittel 48 sind beispielsweise als IGBT (Insulated Gate Bipolar Transistor) ausgebildet. Der Einsatz weiterer, dem Fachmann als sinnvoll erscheinender Schaltmittel, wie z.B. der Einsatz von Mosfet (Metal Oxid Semiconductor Field Effect Transistor oder Metall-Oxid-Halbleiter-Feldeffekttransistor), ist denkbar. Die Doppelbrückenschaltung 42 weist eine Doppelhalbbrückentopologie auf. Die Leistungseinheiten 44, 46 entsprechen jeweils einem Schalterzweig 50 bzw. 52, in welchem jeweils ein Paar von Schaltmitteln 48 angeordnet ist. Die Doppelbrückenschaltung 42 umfasst ferner zwei Kondensatorzweige 54, 56 mit jeweils einem Paar von Kondensatoren und zwei Brückenzweige 58, 60, in welchen jeweils eines der Heizelemente 18 angeordnet ist. Der Brückenzweig 58 ist mit dem Kondensatorzweig 54 verbunden, während der Brückenzweig 60 mit dem Kondensatorzweig 56 verbunden ist. Der Brückenzweig 58 kann ferner mit Hilfe eines Paars von Schaltmitteln 62, 64 wahlweise mit dem Schalterzweig 50 oder 52 verbunden werden. Durch das Paar von Schaltmitteln 62, 64 kann ferner eine wahlweise Verbindung des Brückenzweigs 60 mit einem der Schalterzweige 50 oder 52 erreicht werden. Durch die Schaltmittel 62, 64 können also die Heizelemente 18 jeweils wahlweise mit der Leistungseinheit 44 oder mit der Leistungseinheit 46 verbunden werden. In dieser Ausführung sind die Schaltmittel 62, 64 jeweils als Relais ausgebildet.

Die Doppelbrückenschaltung 42 ist an eine Gleichstromschiene 66 angeschlossen, welche ein zur Versorgung der Leistungseinheiten 44, 46 vorgesehenes Gleichstromsignal mit einer Gleichspannung V_{d} bereitstellt. Das Gleichstromsignal wird, ausgehend von einer Wechselspannungsversorgung 68, wie z.B. einer Netzstromversorgung, von einem Gleichrichter 70 erzeugt. Ausgehend vom Gleichstromsignal erzeugen die Leistungseinheiten 44, 46 mittels Schaltvorgängen der Schaltmittel 48 einen Wechselstrom mit der Heizfrequenz. Die mit diesem Wechselstrom gespeisten Heizelemente 18 erzeugen, wie oben beschrieben, ein als magnetisches Wechselfeld ausgebildetes Heizsignal, mittels dessen ein Erhitzen eines auf der Kochplatte 12 angeordneten Gegenstands erreicht werden kann. Diese Schaltvorgänge der Schaltmittel 48 werden im Betrieb von der Steuereinheit 20 (siehe auch Figur 1) gesteuert. In der Ausführung der Heizvorrichtung 24 werden die Schaltvorgänge mittels der Steuereinheit 38 (siehe Figur 2) gesteuert. Der Übersichtlichkeit halber sind die Verbindungen der Schaltmittel 48 zur Steuereinheit 20 gestrichelt dargestellt. Die von den Leistungseinheiten 44, 46 zu versorgenden Lasten in den Brückenzweigen 58, 60 sind schematisch mittels eines Widerstandssymbols dargestellt. Um eine Rückkopplung eines elektrischen Signals mit der Heizfrequenz in die Wechselspannungsversorgung 68 zu verhindern, ist eine Entstörungseinheit 72 mit einer Induktivität und einem Kondensator vorgesehen.

Die Heizvorrichtungsschaltung 40 weist ferner eine Sensoreinheit 74 auf. Diese umfasst Sensormittel 76, die jeweils einem Schaltmittel 48 zugeordnet sind. Sie sind als Temperatursensor zur Erfassung einer Temperaturkenngröße V_{T}, die von der Temperatur des jeweiligen Schaltmittels 48 abhängt, vorgesehen. Die Sensormittel 76 können in direktem Kontakt mit jeweils einem Schaltmittel 48 stehen oder sie können die Temperaturkenngröße V_{T} ohne Berührung des jeweiligen Schaltmittels 48 erfassen. Die Sensormittel 76 können beispielsweise als Widerstandssensoren ausgebildet sein, welche einen von der Temperatur abhängigen elektrischen Widerstand aufweisen. Eine Ausführung der Heizvorrichtungsschaltung 40, in welcher der Leistungseinheit 44 und/oder 46 ein einziges Sensormittel 76 zugeordnet ist, ist denkbar. Die Sensoreinheit 74 weist ferner zwei Strommesser 78 auf, welche jeweils in einem der Schalterzweige 50, 52 angeordnet sind. Diese Strommesser 78, die beispielsweise als Stromwandler ausgebildet sind, erfassen eine Kenngröße, die von einem im jeweiligen Schalterzweig 50, 52 fließenden Strom abhängt. Die Intensität dieses Stroms beeinflusst die Temperatur der im jeweiligen Schalterzweig 50, 52 angeordneten Schaltmittel 48. Aus diesem Zusammenhang werden die von den Strommessern 78 erfassten Kenngrößen als Temperaturkenngrößen K_{S} der Schaltmittel 48 betrachtet. Die Strommesser 78 werden zur Erhöhung der Genauigkeit in der Berücksichtigung der Temperaturen der Leistungseinheiten 44, 46 eingesetzt, wodurch kostengünstige und einfache Sensormittel 76 eingesetzt werden können. Wird durch die Sensormittel 76 eine genügende Genauigkeit erreicht, und zwar beispielsweise, wenn die Temperaturkenngrößen V_{T} mittels der Sensormittel 76 durch einen direkten Kontakt mit dem jeweiligen Schaltmittel 48 erfasst werden, kann in einer weiteren Ausführung der Heizvorrichtungsschaltung 40 auf den Einsatz der Strommesser 78 verzichtet werden. Die von den Sensormitteln 76 und den Strommessern 78 erfassten Temperaturkenngrößen V_{T}, K_{S} sind als elektrische Kenngrößen ausgebildet. Insbesondere sind die von den Sensormitteln 76 erfassten Temperaturkenngrößen V_{T} als elektrische Spannungen ausgebildet. Die von der Sensoreinheit 74 erfassten Temperaturkenngrößen V_{T}, K_{S} werden in einer Steuereinheit 80 gesammelt. Diese Steuereinheit 80 steht mit den Schaltmitteln 62, 64 zur wahlweisen Verbindung der Leistungseinheiten 44, 46 mit den Heizelementen 18 in Wirkverbindung. Diese Steuereinheit 80 kann ferner zumindest teilweise einstückig mit der Steuereinheit 20 zur Steuerung der Schaltvorgänge der Schaltmittel 48 ausgebildet sein. Die Steuereinheit 80 kann eine Recheneinheit, wie z.B. einen Mikroprozessor, aufweisen.

Im Betrieb der Leistungseinheiten 44, 46 können, insbesondere wenn die Leistungseinheiten 44, 46 mit einer hohen Leistung betrieben werden, aufgrund von Leistungsverlusten hohe Temperaturen auftreten. Werden die Leistungseinheiten 44, 46 auf lange Dauer in einem solchen Hochleistungsregime betrieben, ist der Einsatz von Kühlungsmaßnahmen notwendig, wie z.B. die Verwendung eines Kühlkörpers und/oder einer Lüftungseinheit, um Beschädigungen der Heizvorrichtungsschaltung 40 zu vermeiden, wobei dieser Einsatz einen hohen Kostenaufwand und/oder Lärmbelästigungen mit sich bringt. Dies kann vorteilhaft reduziert werden, indem eine Strategie zur Verteilung der Leistungsversorgung der Heizelemente 18 auf die zur Verfügung stehenden Leistungseinheiten 44, 46 entwickelt wird. Hierzu ist die Heizvorrichtungsschaltung 40 mit einer Entlastungseinheit 82 versehen, die dazu vorgesehen ist, die Leistungseinheiten 44, 46 in deren Betrieb zu entlasten.

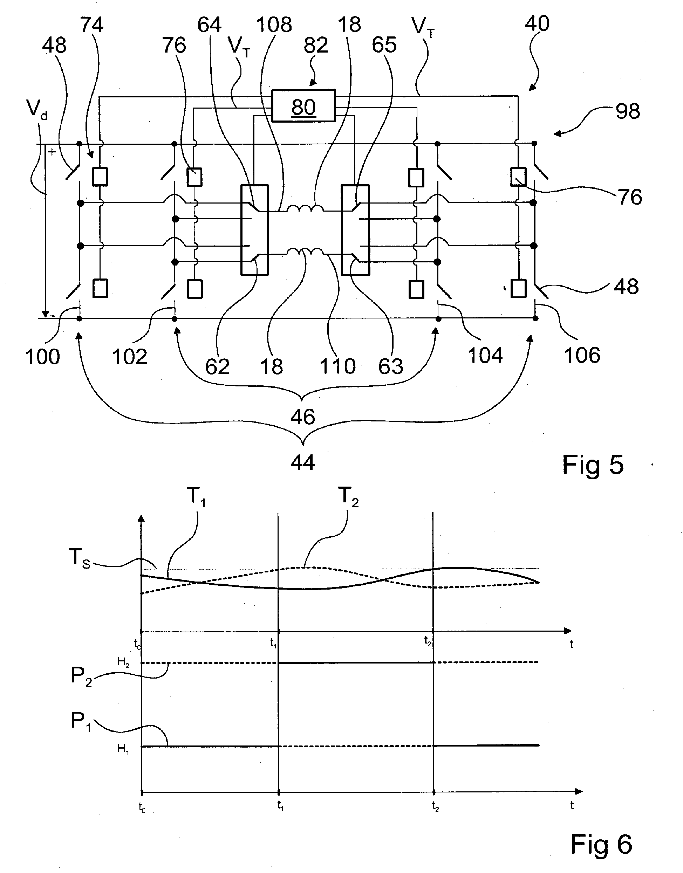

Die Entlastungseinheit 82 weist im in Figur 3 dargestellten Ausführungsbeispiel der Heizvorrichtungsschaltung 40 die Steuereinheit 80 und die Schaltmittel 62, 64 auf. Ferner steht die Sensoreinheit 74 mit der Steuereinheit 80 der Entlastungseinheit 82 in Wirkverbindung. Im Betrieb der Leistungseinheiten 44, 46 bewirkt die Entlastungseinheit 82, dass eine von einer der Leistungseinheiten 44, 46 abgegebene Leistung durch die andere der Leistungseinheiten 44, 46 übernommen wird. In diesem Ausführungsbeispiel wird dies mittels eines Austauschs der von den Leistungseinheiten 44, 46 abzugebenden Leistungen bewirkt. Außerdem erfolgen zwischen den Leistungseinheiten 44, 46 gegenseitige Leistungsübernahmen in Abhängigkeit von der von der Sensoreinheit 74 erfassten Temperaturkenngrößen V_{T}, K_{S}. Dieser Austausch wird an einem Beispiel anhand von Figur 6 erläutert.

Figur 6 zeigt ein Diagramm, welches in zwei Bereiche aufgeteilt ist. Im unteren Bereich sind als Funktion der Zeit t die Verläufe der Leistungen, die im Betrieb der Heizelemente 18 von den Leistungseinheiten 44, 46 abgegeben werden, dargestellt. Die durchgezogene Linie entspricht der von der Leistungseinheit 44 abgegebenen Leistung P₁, während die gestrichelte Linie der von der Leistungseinheit 46 abgegebenen Leistung P₂ zugeordnet ist. Im oberen Bereich sind die Verläufe der Temperaturen T₁ und T₂ der Leistungseinheiten 44 (durchgezogene Linie) bzw. 46 (gestrichelte Linie) dargestellt. Die Kurven entsprechen dem Verlauf der auf die Schaltmittel 48 der jeweiligen Leistungseinheit 44, 46 gemittelten Mitteltemperatur. Alternativ kann bei den Leistungseinheiten 44, 46 die jeweilige maximale Temperatur unter den Schaltmitteln 48 berücksichtigt werden. Es soll an dieser Stelle bemerkt werden, dass die Temperaturverläufe zum Zweck der Veranschaulichung gezeigt werden. Zum Betätigen der hier unten beschriebenen Austauschvorgänge müssen nicht notwendigerweise die im Diagramm gezeigten Werte der Temperaturen T₁, T₂ ermittelt werden. Die Austauschvorgänge können anhand von den erfassten Temperaturkenngrößen V_{T}, K_{S} ausgelöst werden, ohne dass die Temperaturwerte T₁, T₂ ermittelt werden.

Es sei angenommen, dass an das Heizelement 18 im Brückenzweig 58 eine Heizleistung H₁ abzugeben ist, während das Heizelement 18 im Brückenzweig 60 mit der Heizleistung H₂ gespeist werden soll. Dabei ist die Heizleistung H₂ größer als die Heizleistung H₁. Diese Heizleistungen H₁, H₂ hängen insbesondere von der von dem Bediener jeweils eingestellten Leistungsstufe ab. Vom Zeitpunkt t₀ bis zum Zeitpunkt t₁ wird das Heizelement 18 im Brückenzweig 60 von der Leistungseinheit 46 mit der Leistung P₂ = H₂ versorgt. Dies entspricht der in Figur 3 gezeigten Konfiguration, in welcher die Leistungseinheit 46 mit dem Brückenzweig 60 verbunden ist. Zum Zeitpunkt t₁ erreicht die Temperatur T₂ der Leistungseinheit 46 eine voreingestellte Schwelle T_{S}. Dies wird von der Steuereinheit 80 detektiert, die einen Austauschvorgang der Zuordnung zwischen den Leistungseinheiten 44, 46 und den Brückenzweigen 58, 60 betätigt. Hierzu bilden die Steuereinheit 80 und die Schaltmittel 62, 64 eine Schalteinheit 84 der Entlastungseinheit 82. Diese Schalteinheit 84 bewirkt die Leistungsübernahme der von der Leistungseinheit 46 abgegebenen Leistung P₂ = H₂ durch die Leistungseinheit 44. Hierbei werden mittels eines Schaltsignals der Steuereinheit 80 die Schaltmittel 62, 64 umgeschaltet, so dass die Leistungseinheit 44 mit dem Brückenzweig 60 und die Leistungseinheit 46 mit dem Brückenzweig 58 verbunden wird. Wie anhand von Figur 6 erkennbar ist, wird nun das Heizelement 18 im Brückenzweig 60 weiter durch die Leistungseinheit 44 mit der Leistung P₁ = H₂ versorgt. Durch diesen Vorgang wird die Leistungseinheit 46 von einem Betrag in Höhe der Differenz H₂ - H₁ zwischen den Leistungen H₂ und H₁ entlastet und wird mit der Leistung P₂ = H₁ betrieben. Diese Entlastung erfolgt durch ein Zusammenwirken der Steuereinheit 80, der Schaltmittel 62, 64 und der Leistungseinheit 44, so dass bei der Entlastung der Leistungseinheit 46 die Leistungseinheit 44 einen Teil der Entlastungseinheit 82 darstellt.

Die Heizelemente 18 werden in der relativ zur Figur 3 ausgetauschten Konfiguration bis zu einem Zeitpunkt t₂ betrieben, an welchem die Temperatur T₁ der Leistungseinheit 44 die Schwelle T_{S} erreicht. Mittels der Schalteinheit 84 wird die Doppelbrückenschaltung 42 in die in Figur 3 dargestellte Konfiguration zurückgeschaltet, so dass die Leistungseinheit 44 durch die Übernahme von deren abgegebener Leistung P₁ = H₂ durch die Leistungseinheit 46 entlastet wird. Der Übersichtlichkeit halber werden hier nur zwei Austauschvorgänge dargestellt. Die gezeigten gegenseitigen Leistungsübernahmen können auch nach dem Zeitpunkt t₂ in Abhängigkeit der Temperaturverläufe T₁, T₂ wiederholt werden.

In den Figuren 4 und 5 sind weitere Ausführungsbeispiele der Heizvorrichtungsschaltung 40 dargestellt. Hierbei werden Bauteile, die in Bezug auf das oben beschriebene Ausführungsbeispiel eine gleiche Funktion aufweisen, mit gleichen Bezugszeichen versehen.

Die in Figur 4 gezeigte Heizvorrichtungsschaltung 40 umfasst eine Doppelbrückenschaltung 86, die eine Doppelvollbrückentopologie aufweist. Die Doppelbrückenschaltung 86 ist an die Gleichstromschiene 66 angeschlossen und weist drei Schalterzweige 88, 90, 92 auf, in welchen jeweils ein Paar von Schaltmitteln 48 angeordnet ist. Die Doppelbrückenschaltung 86 weist ferner zwei Brückenzweige 94, 96 auf, in welchen jeweils ein als Induktionsspule ausgebildetes Heizelement 18 angeordnet ist. Diese Heizelemente 18 sind beide mit dem Schalterzweig 92 verbunden. Zur wahlweise Verbindung der Brückenzweige 94, 96 mit den Schalterzweigen 88, 90 sind die Brückenzweige 94, 96 mit als Relais ausgebildeten Schaltmitteln 62, 64 versehen. In dieser Doppelbrückenschaltung 86 stellt das Paar von Schalterzweigen 88 und 92 eine erste Leistungseinheit 44 dar. Das Paar von Schalterzweigen 90 und 92 entspricht einer zweiten Leistungseinheit 46. In dieser Topologie weisen die Leistungseinheiten 44, 46 einen gemeinsamen Schalterzweig, und zwar den Schalterzweig 92, auf. Die Heizvorrichtungsschaltung 40 umfasst ferner eine Sensoreinheit 74 zur Erfassung von Temperaturkenngrößen V_{T} der Schaltmittel 48. Den Schaltmitteln 48 ist jeweils ein als Temperatursensor ausgebildetes Sensormittel 76 zugeordnet. Die erfassten Temperaturkenngrößen V_{T}, die als elektrische Spannungen ausgebildet sind, werden in einer Steuereinheit 80 gesammelt, welche mit den Schaltmitteln 62, 64 in Wirkverbindung steht. Der Übersichtlichkeit halber wurde auf die Darstellung der Steuereinheit 20 (siehe Figur 1) zum Steuern der Schaltvorgänge der Schaltmittel 48 verzichtet. Die Heizvorrichtungsschaltung 40 umfasst ferner eine Entlastungseinheit 82, die die Steuereinheit 80 und die Schaltmittel 62, 64 umfasst. Wie oben im vorherigen Ausführungsbeispiel beschrieben, bewirkt die Entlastungseinheit 82 anhand der erfassten Temperaturkenngrößen V_{T} mittels eines Umkonfigurierens der Doppelbrückenschaltung 86 einen Austausch der von den Leistungseinheiten 44, 46 abzugebenden Leistungen. Hierzu bilden die Steuereinheit 80 und die Schaltmittel 62, 64 eine Schalteinheit 84, die die Zuordnung der Brückenzweige 94, 96 zu den Leistungseinheiten 44, 46 jeweils austauscht. Dabei wird aus der in Figur 4 gezeigten Konfiguration die invertierte Konfiguration erreicht, in welcher der Brückenzweig 94 dem Schalterzweig 90 zugeordnet ist, während der Brückenzweig 96 dem Schalterzweig 88 zugeordnet ist. Zur Erläuterung des Austauschprozesses in Abhängigkeit von der Temperatur T₁, T₂ der Leistungseinheiten 44, 46 wird auf die Figur 6 und die obige Beschreibung verwiesen.

Eine weitere Ausführungsform einer Topologie der Heizvorrichtungsschaltung 40 ist in Figur 5 gezeigt. Diese weist eine Doppelbrückenschaltung 98 auf, die zwei Vollbrückenschaltungen umfasst. In dieser Brückentopologie sind vier Schalterzweige 100, 102, 104, 106 mit jeweils einem Paar von Schaltmitteln 48 und zwei Brückenzweige 108, 110, die jeweils ein als Induktionsspule ausgebildetes Heizelement 18 aufweisen, vorgesehen. Es sind ferner Schaltmittel 62, 63, 64, 65 vorgesehen, die eine wahlweise Verbindung der Brückenzweige 108, 110 mit einem der Schalterzweige 100, 102 einerseits und eine wahlweise Verbindung der Brückenzweige 108, 110 mit einem der Schalterzweige 104, 106 anderseits ermöglichen. In dieser Konfiguration können vier verschiedene Leistungseinheiten gebildet werden. Dabei entspricht eine Leistungseinheit einem Paar von Schalterzweigen, wobei die Schalterzweige in einem Paar auf verschiedenen Seiten der Brückenzweige 108, 110 angeordnet sind. So wird in der in Figur 5 gezeigten Konfiguration der Schaltmittel 62 bis 65 eine erste Leistungseinheit 44 durch das Paar von Schalterzweigen 100, 106 gebildet. Eine zweite Leistungseinheit 46 wird durch das Paar von Schalterzweigen 102, 104 gebildet. Alternative Paarungen der Schalterzweige 100, 102, 104, 106 zur Bildung von Leistungseinheiten sind möglich. In der gezeigten Konfiguration wird der Brückenzweig 108 durch die Leistungseinheit 44 versorgt, während der Brückenzweig 110 durch die Leistungseinheit 46 versorgt wird. Die Heizvorrichtungsschaltung 40 weist ferner eine Sensoreinheit 74 auf, die mit Hilfe von Sensormitteln 76, welche jeweils einem Schaltmittel 48 zugeordnet sind, zur Erfassung von Temperaturkenngrößen V_{T} der Leistungseinheiten 44, 46 vorgesehen ist. Die erfassten Temperaturkenngrößen V_{T} werden in einer Steuereinheit 80 gesammelt, welche mit den Schaltmitteln 62 bis 65 in Wirkverbindung steht. Die Heizvorrichtungsschaltung 40 weist wie in den vorherigen Ausführungsbeispielen eine Entlastungseinheit 82 auf, die die Steuereinheit 80 und die Schaltmittel 62 bis 65 umfasst. Wie oben beschrieben, kann die Entlastungseinheit 82 ausgehend von der in Figur 5 gezeigten Konfiguration die Brückentopologie umkonfigurieren, indem der Brückenzweig 108 mit der Leistungseinheit 46 und der Brückenzweig 110 mit der Leistungseinheit 44 verbunden wird. Dabei wird ein Austausch der von den Leistungseinheiten abzugebenden Leistungen bewirkt. Zur Erläuterung dieses Austauschvorgangs in Abhängigkeit der Temperaturkenngrößen V_{T} wird auf die Figur 6 und die obige Beschreibung verwiesen.

Die Brückenzweige 108, 110 können durch die Schaltmittel 62 bis 65 ferner mit einem gemeinsamen Schalterzweig verbunden werden. In diesem Fall weist die Heizvorrichtungsschaltung 40 eine Doppelvollbrückentopologie auf, die der in Figur 4 gezeigten Brückentopologie entspricht. Zur Erläuterung dieser Topologie sei auf die Beschreibung der Figur 4 verwiesen. In dieser speziellen Konfiguration, in der beispielsweise beide Brückenzweige 108, 110 mit dem Schalterzweig 104 verbunden sind, kann der ungenutzte Schalterzweig 106 als Teil der Entlastungseinheit 82 zur Entlastung des gemeinsamen Schalterzweigs 104 benutzt werden. Abhängig von einer Temperaturkenngröße V_{T} des Schalterzweigs 104 kann eine Verbindung eines der Brückenzweige 108, 110 mit dem Schalterzweig 106 durch einen Schaltvorgang des Schaltmittels 65 bzw. 63 hergestellt werden, wodurch eine Entlastung des Schalterzweigs 104 erreicht werden kann. Eine weitere Entlastung des Schalterzweigs 104 kann erreicht werden, indem ein zweiter Brückenzweig mit dem Schalterzweig 106 verbunden wird, welcher dann als gemeinsamer Brückenzweig betrieben wird.

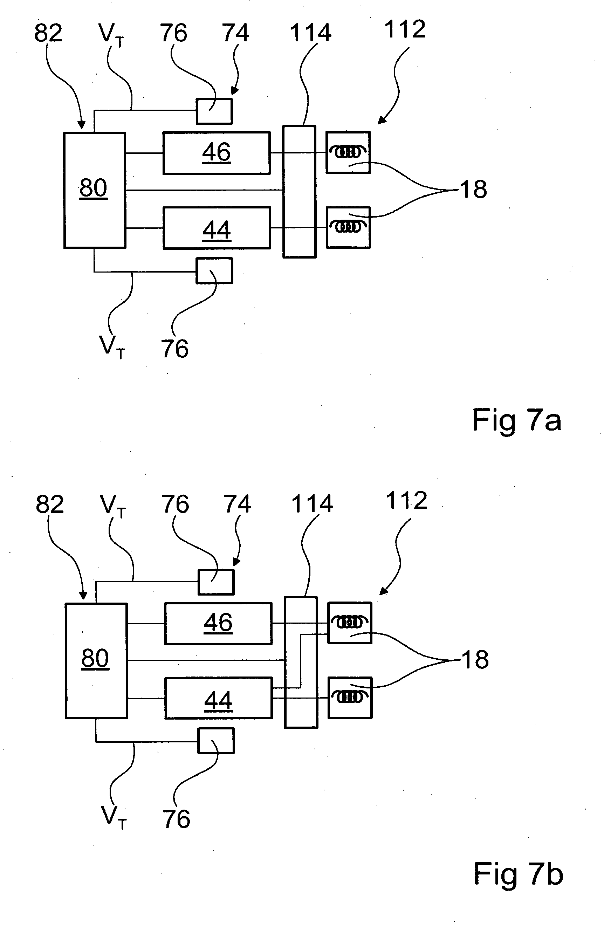

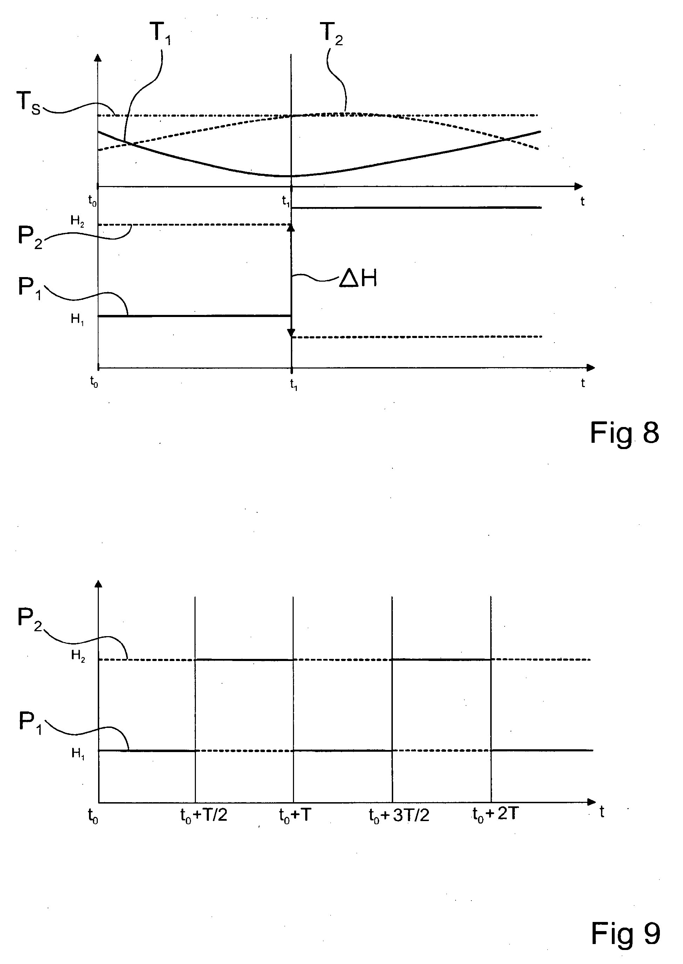

Eine weitere Ausführung einer Heizvorrichtungsschaltung 112 der Heizvorrichtung 10 bzw. 24 ist in Figur 7a dargestellt. Zwei als Induktionsspulen ausgebildete Heizelemente 18 stehen jeweils mit einer Leistungseinheit 44, 46 in Wirkverbindung. Verbindungen zwischen den Leistungseinheiten 44, 46 und den Heizelementen 18 können mit Hilfe eines Schaltmittels 114, welches einen Satz von nicht gezeigten Schaltern aufweist, konfiguriert werden. Die Leistungseinheiten 44, 46 weisen wie in den vorherigen Beispielen nicht gezeigte, beispielsweise als IGBT ausgebildete Schaltmittel 48 auf, die mittels Schaltvorgängen einen Wechselstrom mit der Heizfrequenz erzeugen. Die Heizvorrichtungsschaltung 112 weist ferner eine Sensoreinheit 74 zur Erfassung von Temperaturkenngrößen V_{T} der Leistungseinheiten 44, 46 auf. Den Leistungseinheiten 44, 46 ist jeweils ein Sensormittel 76 zugeordnet, das z.B. als Widerstandssensor ausgebildet ist. Die Sammlung der erfassten Temperaturkenngrößen V_{T} erfolgt durch eine Steuereinheit 80. Diese steht ferner in Wirkverbindung mit dem Schaltmittel 114 und mit den Leistungseinheiten 44, 46. Die Heizvorrichtungsschaltung 112 weist ferner eine Entlastungseinheit 82 auf, die zur Entlastung der Leistungseinheiten 44, 46 im Betrieb der Heizelemente 18 vorgesehen ist. Die Entlastungseinheit 82 weist die Steuereinheit 80 und das Schaltmittel 114 auf. Ein Beispiel eines Entlastungsvorgangs, bei dem die Leistungseinheit 46 von einem Teil ihrer abzugebenden Leistung entlastet wird, ist anhand von den Figuren 7b und 8 erläutert.

Figur 8 zeigt ein Diagramm, welches in zwei Bereiche aufgeteilt ist. Im unteren Bereich sind als Funktion der Zeit t die Verläufe der Leistungen P₁ und P₂, die im Betrieb der Heizelemente 18 von den Leistungseinheiten 44 bzw. 46 abgegeben werden, dargestellt. Die durchgezogene Linie entspricht der von der Leistungseinheit 44 abgegebenen Leistung P₁, während die gestrichelte Linie der abgegebenen Leistung P₂ der Leistungseinheit 46 zugeordnet ist. Im oberen Bereich sind die Verläufe der Temperaturen T₁, T₂ der Leistungseinheiten 44 (durchgezogene Linie) bzw. 46 (gestrichelte Linie) dargestellt. Zum Zeitpunkt t₀ weist die Heizvorrichtungsschaltung 112 die in Figur 7a gezeigte Konfiguration auf. Hierbei wird durch die Leistungseinheit 44 eine Leistung P₁ = H₁ und durch die Leistungseinheit 46 eine Leistung P₂ = H₂ abgegeben, wobei die Heizleistung H₂ größer als die Heizleistung H₁ ist. Zum Zeitpunkt t₁ erreicht die Temperatur T₂ der Leistungseinheit 46 eine voreingestellte Schwelle T_{S}. Dies wird von der Steuereinheit 80 detektiert, die das Schaltmittel 114 betätigt. Hierbei wird eine Verbindung zwischen der Leistungseinheit 44 und dem von der Leistungseinheit 46 betriebenen Heizelement 18 hergestellt. Diese geänderte Konfiguration ist in Figur 7b dargestellt. Ferner bewirkt die Steuereinheit 80 der Entlastungseinheit 82 eine Leistungsübernahme eines Teils ΔH der von der Leistungseinheit 46 abgegeben Leistung P₂ durch die Leistungseinheit 44. Nach dieser Umschaltung leistet die Leistungseinheit 44 die Leistung P₁ = H₁, + ΔH, während die entlastete Leistungseinheit 46 nur noch die Leistung P₂ = H₂ - ΔH zu leisten hat, wobei P₂ kleiner als H₁ ist. Dabei werden die Heizelemente 18 weiter unverändert mit den Leistungen H₁ bzw. H₂ betrieben.

In Figur 9 ist eine weitere Entlastungsstrategie für die Entlastungseinheit 82 der Heizvorrichtungsschaltung 40 aus Figur 3 dargestellt. Figur 9 zeigt ein Diagramm, das die Verläufe der Leistungen, die im Betrieb der Heizelemente 18 von den Leistungseinheiten 44, 46 abgegeben werden, als Funktion der Zeit t darstellt. Die durchgezogene Linie entspricht der von der Leistungseinheit 44 abgegebenen Leistung P₁, während die gestrichelte Linie der von der Leistungseinheit 46 abgegebenen Leistung P₂ zugeordnet ist. Es sei angenommen, dass an das Heizelement 18 im Brückenzweig 58 eine Heizleistung H₁ abzugeben ist, während das Heizelement 18 im Brückenzweig 60 mit der Heizleistung H₂ gespeist werden soll. Dabei ist die Heizleistung H₂ größer als die Heizleistung H₁. Zum Zeitpunkt t₀ befindet sich die Doppelbrückenschaltung 42 in der in Figur 3 gezeigten Konfiguration. Die Steuereinheit 80 ist mit einer Zeiteinheit 116 versehen. Diese bewirkt, dass die Steuereinheit 80 periodisch mit einer Periode T / 2 einen Austauschvorgang der von den Leistungseinheiten 44, 46 abzugebenden Heizleistungen H₁ und H₂ auslöst. Dieser Austauschvorgang ist oben beschrieben und wird hier nicht näher erläutert. Mittels der Zeiteinheit 116 gibt die Steuereinheit periodisch nach Ablauf einer Periode T / 2 ein Steuersignal aus, durch welches die Schaltmittel 62, 64 betätigt werden. Daher wird die Doppelbrückenschaltung 42 periodisch mit der Periode T in deren Anfangskonfiguration zu t = t₀ zurückgeschaltet. Diese periodischen Austauschvorgänge können beispielsweise stattfinden, wenn ein gewünschter Temperaturausgleich zwischen den Temperaturen T₁ und T₂ erreicht ist. Dadurch kann diese vorteilhafte Temperaturverteilung einfach aufrechterhalten bleiben. Es ist auch denkbar, dass diese periodischen Austauschvorgänge bei einer Ausführung der Heizvorrichtungsschaltung 40 stattfinden, in welcher auf den Einsatz der Sensoreinheit 74 verzichtet wird. Ferner ist die Anwendung solcher periodischen Schaltvorgänge bei der anhand von Figur 7 beschriebenen teilweisen Leistungsübernahme ebenfalls denkbar.

### Bezugszeichen

- 10: Heizvorrichtung
- 12: Kochplatte
- 14: Rahmen
- 16: Kochzone
- 18: Heizelement
- 20: Steuereinheit
- 22: Bedienelement
- 24: Heizvorrichtung
- 26: Befestigungsrahmen
- 28: Kochplatte
- 30: Bedienfeld
- 32: Gegenstand
- 34: Gegenstand
- 36: Heizelement
- 38: Steuereinheit
- 40: Heizvorrichtungsschaltung
- 42: Doppelbrückenschaltung
- 44: Leistungseinheit
- 46: Leistungseinheit
- 48: Schaltmittel
- 50: Schalterzweig
- 52: Schalterzweig
- 54: Kondensatorzweig
- 56: Kondensatorzweig
- 58: Brückenzweig
- 60: Brückenzweig

- 62: Schaltmittel
- 63: Schaltmittel
- 64: Schaltmittel
- 65: Schaltmittel
- 66: Gleichstromschiene
- 68: Wechselspannungsversorgung
- 70: Gleichrichter
- 72: Entstörungseinheit
- 74: Sensoreinheit
- 76: Sensormittel
- 78: Strommesser
- 80: Steuereinheit
- 82: Entlastungseinheit
- 84: Schalteinheit
- 86: Doppelbrückenschaltung
- 88: Schalterzweig
- 90: Schalterzweig
- 92: Schalterzweig
- 94: Brückenzweig
- 96: Brückenzweig
- 98: Doppelbrückenschaltung
- 100: Schalterzweig
- 102: Schalterzweig
- 104: Schalterzweig
- 106: Schalterzweig

- 108: Brückenzweig
- 110: Brückenzweig
- 112: Heizvorrichtungsschaltung
- 114: Schaltmittel
- 116: Zeiteinheit
- V_{d}: Gleichspannung
- V_{T}: Temperaturkenngröße
- K_{S}: Temperaturkenngröße
- t: Zeit
- t₀: Zeitpunkt
- t₁: Zeitpunkt
- t₂: Zeitpunkt
- P₁: Leistung
- P₂: Leistung
- H₁: Heizleistung
- H₂: Heizleistung
- T_{S}: Schwelle
- ΔH: Teil
- T: Periode
- T1: Temperatur
- T2: Temperatur

## Patentansprüche

1. Heizvorrichtungsschaltung, insbesondere für eine Induktionskochvorrichtung, mit zumindest einer ersten Leistungseinheit (46), die zur Leistungsversorgung eines Heizelements (18; 36) vorgesehen ist, **gekennzeichnet durch** eine Entlastungseinheit (82), die dazu vorgesehen ist, **durch** eine wenigstens teilweise Leistungsübernahme in zumindest einem Betriebsmodus die erste Leistungseinheit (46) zu entlasten, wobei die Entlastungseinheit (82) eine zweite, dem Heizelement (18; 36) zugeordnete Leistungseinheit (44) aufweist, die wahlweise zur Entlastung der ersten Leistungseinheit (46) eingeschaltet werden kann, und wobei die zweite Leistungseinheit (44) zum Zweck einer Entlastung der ersten Leistungseinheit (46) zur Versorgung des ersten Heizelements (18; 36) betrieben werden kann.

2. Heizvorrichtungsschaltung nach Anspruch 1, **dadurch gekennzeichnet, dass** zumindest eine zweite Leistungseinheit (44) für ein zweites Heizelement (18; 36) vorgesehen ist und die Entlastungseinheit (82) zumindest teilweise einstückig mit der zweiten Leistungseinheit (44) ausgeführt ist.

3. Heizvorrichtungsschaltung nach Anspruch 1 oder 2, **dadurch gekennzeichnet, dass** zumindest eine zweite Leistungseinheit (44) für ein zweites Heizelement (18; 36) vorgesehen ist und dass die Entlastungseinheit (82) dazu dient, bei einer Leistungsversorgung von zumindest zwei Heizelementen (18; 36) mittels der Leistungseinheiten (44, 46) eine Leistungsübernahme von zumindest einem Teil (ΔH) einer von der ersten Leistungseinheit (46) abgegebenen Leistung (H₂) durch die zweite Leistungseinheit (44) zu bewirken.

4. Heizvorrichtungsschaltung nach Anspruch 3, **dadurch gekennzeichnet, dass** die Entlastungseinheit (82) eine Schalteinheit (84) aufweist, die dazu vorgesehen ist, die Leistungsübernahme mittels eines Austauschs der von den Leistungseinheiten (44, 46) abzugebenden Leistungen (H₁, H₂) zu bewirken.

5. Heizvorrichtungsschaltung nach einem der vorhergehenden Ansprüche, **gekennzeichnet durch** eine Sensoreinheit (74) zur Erfassung einer Kenngröße (V_{T}, K_{S}), mit welcher die Entlastungseinheit (82) in Wirkverbindung steht.

6. Heizvorrichtungsschaltung nach Anspruch 5, **dadurch gekennzeichnet, dass** die Entlastungseinheit (82) eine Steuereinheit (80) aufweist, die dazu vorgesehen ist, in Abhängigkeit von der Kenngröße (V_{T}, K_{S}) die Leistungsübernahme zu bewirken.

7. Heizvorrichtungsschaltung nach Anspruch 5 oder 6, **dadurch gekennzeichnet, dass** die Sensoreinheit (74) zur Erfassung einer Kenngröße (V_{T}, K_{S}) zumindest der ersten Leistungseinheit (46) vorgesehen ist.

8. Heizvorrichtungsschaltung nach einem der Ansprüche 5 bis 7, **dadurch gekennzeichnet, dass** die Sensoreinheit (74) ein Sensormittel (76) zur Erfassung einer Temperaturkenngröße (V_{T}, K_{S}) aufweist.

9. Heizvorrichtungsschaltung nach einem der Ansprüche 5 bis 8, **dadurch gekennzeichnet, dass** die Sensoreinheit (74) einen Strommesser (78) aufweist.

10. Heizvorrichtungsschaltung nach einem der vorhergehenden Ansprüche, **dadurch gekennzeichnet, dass** die Entlastungseinheit (82) eine Steuereinheit (80) aufweist, die dazu vorgesehen ist, die Leistungsübernahme periodisch zu bewirken.

11. Heizvorrichtungsschaltung nach einem der vorhergehenden Ansprüche, **dadurch gekennzeichnet, dass** zumindest eine zweite Leistungseinheit (44) vorgesehen ist und dass die erste und die zweite Leistungseinheit (44, 46) in einer Doppelbrückenschaltung (42; 86; 98) angeordnet sind.

12. Heizvorrichtungsschaltung nach Anspruch 11, **dadurch gekennzeichnet, dass** die Entlastungseinheit (82) eine Schalteinheit (84) aufweist, die zur wahlweisen Verbindung der Leistungseinheiten (44, 46) mit jeweils einem ersten oder zumindest einem zweiten Brückenzweig (58, 60; 94, 96; 108, 110) vorgesehen ist.

13. Heizvorrichtungsschaltung nach einem der vorhergehenden Ansprüche, **gekennzeichnet durch** einen Satz von Heizelementen (36) und eine Steuereinheit (38), die dazu vorgesehen ist, abhängig von einer Position eines zu heizenden Gegenstands (32, 34) relativ zu den Heizelementen (36) eine zum Heizen des Gegenstands (32, 34) ausgebildete Heizgruppe von Heizelementen (36) zu bilden.

14. Heizvorrichtung, insbesondere Induktionskochvorrichtung, mit einer Heizvorrichtungsschaltung (40; 112) nach einem der vorhergehenden Ansprüche.

15. Verfahren zur Leistungsversorgung von zumindest zwei Heizelementen (18; 36) bei einer Heizvorrichtung (10; 24), insbesondere einer Induktionskochvorrichtung, mittels zumindest einer ersten Leistungseinheit (44, 46), die zur Leistungsversorgung eines ersten der Heizelemente (18; 36) vorgesehen ist, und einer zweiten Leistungseinheit (44, 46), **dadurch gekennzeichnet, dass** bei einer Leistungsversorgung von zumindest zwei Heizelementen (18; 36) mittels der Leistungseinheiten (44, 46), zumindest ein Teil (ΔH) einer von der ersten Leistungseinheit (46) abzugebenden Leistung (H₂) von der zweiten Leistungseinheit (44) übernommen wird und die zweiten Leistungseinheit (44, 46) wahlweise zur Entlastung der ersten Leistungseinheit (46) eingeschaltet werden kann, und die zweite Leistungseinheit (44) zum Zweck einer Entlastung der ersten Leistungseinheit (46) zur Versorgung des ersten Heizelements (18; 36) betrieben werden kann.

16. Verfahren nach Anspruch 15, **dadurch gekennzeichnet, dass** die Leistungsübernahme mittels eines Austauschs der von den Leistungseinheiten (44, 46) abzugebenden Leistungen (H₁, H₂) erfolgt.

17. Verfahren nach Anspruch 15 oder 16, **dadurch gekennzeichnet, dass** die Leistungsübernahme in Abhängigkeit von einer sensierten Kenngröße (V_{T}, K_{S}) erfolgt.

## Claims

1. Heating device connection, in particular for an induction cooking appliance, having at least one first power unit (46) which is provided for supplying power to a heating element (18; 36), **characterised by** a relief unit (82) which is provided to relieve the first power unit (46) by an at least partial power take-over in at least one operating mode, wherein the relief unit (82) has a second power unit (44), associated with the heating element (18; 36), which optionally can be switched on to relieve the first power unit (46), and wherein the second power unit (44) can be operated for the purpose of relieving the first power unit (46) for supplying the first heating element (18; 36).

2. Heating device connection according to claim 1, **characterised in that** at least one second power unit (44) is provided for a second heating element (18; 36) and the relief unit (82) is designed at least in part to be integral with the second power unit (44).

3. Heating device connection according to claim 1 or 2, **characterised in that** at least one second power unit (44) is provided for a second heating element (18; 36) and that the relief unit (82) serves, when power is supplied to at least two heating elements (18; 36) by means of the power units (44, 46), to effect a power take-over by the second power unit (44) of at least part (ΔH) of a power (H₂) supplied by the first power unit (46).

4. Heating device connection according to claim 3, **characterised in that** the relief unit (82) has a switching unit (84) which is provided to effect the power take-over by means of an exchange of the powers (H₁, H₂) to be supplied by the power units (44, 46).

5. Heating device connection according to one of the preceding claims, **characterised by** a sensor unit (74) for detecting a characteristic (V_{τ}, Kₛ), to which the relief unit (82) is actively connected.

6. Heating device connection according to claim 5, **characterised in that** the relief unit (82) has a control unit (80) which is provided to effect the power take-over as a function of the characteristic (V_{τ}, Kₛ).

7. Heating device connection according to claim 5 or 6, **characterised in that** the sensor unit (74) is provided to detect a characteristic (V_{τ}, Kₛ) at least of the first power unit (46).

8. Heating device connection according to one of claims 5 to 7, **characterised in that** the sensor unit (74) has sensor means (76) to detect a temperature characteristic (V_{τ}, Kₛ).

9. Heating device connection according to one of claims 5 to 8, **characterised in that** the sensor unit (74) has an ammeter (78).

10. Heating device connection according to one of the preceding claims, **characterised in that** the relief unit (82) has a control unit (80) which is provided to effect the power take-over periodically.

11. Heating device connection according to one of the preceding claims, **characterised in that** at least one second power unit (44) is provided and that the first and the second power unit (44, 46) are arranged in a dual bridge connection (42; 86; 98).

12. Heating device connection according to claim 11, **characterised in that** the relief unit (82) has a switching unit (84) which is provided for the optional connection of the power units (44, 46) to a first or at least one second bridge arm (58, 60; 94, 96; 108, 110) in each case.

13. Heating device connection according to one of the preceding claims, **characterised by** a set of heating elements (36) and a control unit (38), which is provided, as a function of a position of an object (32, 34) to be heated relative to the heating elements (36), to form a heating group of heating elements (36) designed to heat the object (32, 34).

14. Heating device, in particular induction cooking device, having a heating device connection (40; 112) according to one of the preceding claims.

15. Method for supplying power to at least two heating elements (18; 36) for a heating device (10; 24), in particular an induction cooking device, by means of at least one first power unit (44, 46), which is provided for supplying power to a first of the heating elements (18; 36), and a second power unit (44, 46), **characterised in that** for a supplying power to at least two heating elements (18; 36) by means of the power units (44, 46) at least part (ΔH) of a power (H₂) to be supplied by the first power unit (46) is taken over by the second power unit (44) and the second power unit (44, 46) can optionally be switched on to relieve the first power unit (46), and the second power unit (44) can be operated for the purpose of relieving the first power unit (46) for supplying the first heating element (18; 36).

16. Method according to claim 15, **characterised in that** the power take-over is effected by means of an exchange of the powers (H₁, H₂) to be supplied by the power units (44, 46).

17. Method according to claim 15 or 16, **characterised in that** the power take-over takes place as a function of a sensed characteristic (V_{τ}, Kₛ).

## Revendications

1. Circuit de dispositif de chauffage, en particulier pour un appareil de cuisson à induction, comprenant au moins une première unité de puissance (46) qui est prévue pour l'alimentation en puissance d'un élément chauffant (18; 36), **caractérisé par** une unité de décharge (82) qui est prévue pour décharger la première unité de puissance (46), par une prise en charge de puissance au moins partielle dans au moins un mode de fonctionnement, où l'unité de décharge (82) présente une deuxième unité de puissance (44) associée à l'élément chauffant (18; 36), deuxième unité de puissance qui peut être enclenchée sélectivement pour la décharge de la première unité de puissance (46), et où la deuxième unité de puissance (44) peut être actionnée dans le but d'une décharge de la première unité de puissance (46) servant à l'alimentation du premier élément chauffant (18; 36).

2. Circuit de dispositif de chauffage selon la revendication 1, **caractérisé en ce qu'**au moins une deuxième unité de puissance (44) est prévue pour un deuxième élément chauffant (18; 36), et l'unité de décharge (82) est réalisée en formant au moins partiellement une seule pièce avec la deuxième unité de puissance (44).

3. Circuit de dispositif de chauffage selon la revendication 1 ou 2, **caractérisé en ce qu'**au moins une deuxième unité de puissance (44) est prévue pour un deuxième élément chauffant (18; 36), et **en ce que** l'unité de décharge (82), dans le cas d'une alimentation en puissance d'au moins deux éléments chauffants (18; 36) au moyen des unités de puissance (44, 46), sert à déclencher, par la deuxième unité de puissance (44), une prise en charge de puissance d'au moins une partie (ΔH) d'une puissance (H₂) fournie par la première unité de puissance (46).

4. Circuit de dispositif de chauffage selon la revendication 3, **caractérisé en ce que** l'unité de décharge (82) présente une unité de commutation (84) qui est prévue pour déclencher la prise en charge de puissance, au moyen d'un échange, des puissances (H₁, H₂) devant être fournies par les unités de puissance (44, 46).

5. Circuit de dispositif de chauffage selon l'une quelconque des revendications précédentes, **caractérisé par** une unité de capteurs (74) servant à la détermination d'un paramètre caractéristique (V_{T}, K_{S}), unité de capteurs avec laquelle l'unité de décharge (82) est en liaison fonctionnelle.

6. Circuit de dispositif de chauffage selon la revendication 5, **caractérisé en ce que** l'unité de décharge (82) présente une unité de commande (80) qui est prévue pour déclencher la prise en charge de puissance, en fonction du paramètre caractéristique (V_{T}, K_{S}).

7. Circuit de dispositif de chauffage selon la revendication 5 ou 6, **caractérisé en ce que** l'unité de capteurs (74) est prévue pour la détermination d'un paramètre caractéristique (V_{T}, K_{S}) au moins de la première unité de puissance (46).

8. Circuit de dispositif de chauffage selon l'une quelconque des revendications 5 à 7, **caractérisé en ce que** l'unité de capteurs (74) présente un moyen formant capteur (76) pour la détermination d'un paramètre caractéristique de température (V_{T}, K_{S}).

9. Circuit de dispositif de chauffage selon l'une quelconque des revendications 5 à 8, **caractérisé en ce que** l'unité de capteur (74) présente un ampèremètre (78).

10. Circuit de dispositif de chauffage selon l'une quelconque des revendications précédentes, **caractérisé en ce que** l'unité de décharge (82) présente une unité de commande (80) qui est prévue pour déclencher périodiquement la prise en charge de puissance.

11. Circuit de dispositif de chauffage selon l'une quelconque des revendications précédentes, **caractérisé en ce qu'**il est prévu au moins une deuxième unité de puissance (44), et **en ce que** la première et la deuxième unité de puissance (44, 46) sont disposées dans un montage en pont double (42; 86; 98).

12. Circuit de dispositif de chauffage selon la revendication 11, **caractérisé en ce que** l'unité de décharge (82) présente une unité de commutation (84) qui est prévue pour la connexion sélective des unités de puissance (44, 46) avec, respectivement, une première ou au moins une deuxième branche du pont (58, 60; 94, 96; 108, 110).

13. Circuit de dispositif de chauffage selon l'une quelconque des revendications précédentes, **caractérisé par** un jeu d'éléments chauffants (36) et par une unité de commande (38) qui est prévue pour former, en fonction d'une position d'un objet (32, 34) à chauffer par rapport aux éléments chauffants (36), un groupe d'éléments chauffants (36), groupe qui est conçu pour le chauffage de l'objet (32, 34).

14. Dispositif de chauffage, en particulier appareil de cuisson à induction, comprenant un circuit de dispositif de chauffage (40; 112) selon l'une quelconque des revendications précédentes.

15. Procédé pour l'alimentation en puissance d'au moins deux éléments chauffants (18; 36) concernant un dispositif de chauffage (10; 24), en particulier un appareil de cuisson à induction, au moyen au moins d'une première unité de puissance (44, 46) qui est prévue pour l'alimentation en puissance d'un premier des éléments chauffants (18; 36), et au moyen d'une deuxième unité de puissance (44, 46), **caractérisé en ce que** dans le cas d'une alimentation en puissance d'au moins deux éléments chauffants (18; 36) au moyen des unités de puissance (44, 46), au moins une partie (ΔH) d'une puissance (H₂) devant être fournie par la première unité de puissance (46) est prise en charge par la deuxième unité de puissance (44), et la deuxième unité de puissance (44, 46) peut être enclenchée sélectivement pour la décharge de la première unité de puissance (46), et la deuxième unité de puissance (44) peut être actionnée dans le but d'une décharge de la première unité de puissance (46) servant à l'alimentation du premier élément chauffant (18; 36).

16. Procédé selon la revendication 15, **caractérisé en ce que** la prise en charge de puissance se produit au moyen d'un échange des puissances (H₁, H₂) devant être fournies par les unités de puissance (44, 46).

17. Procédé selon la revendication 15 ou 16, **caractérisé en ce que** la prise en charge de puissance se produit en fonction d'un paramètre caractéristique détecté (V_{T}, K_{S}).
